# EUROPÄISCHE PATENTANMELDUNG

(11) **EP 4 421 047 A1**
(43) Veröffentlichungstag der Anmeldung: **28.08.2024**
(21) Anmeldenummer: 24155386.6
(22) Anmeldetag: 01.02.2024
(51) Int. Cl.: C04B 16/06, C04B 28/04, C04B 103/00, C04B 111/60

(54) **KUNSTSTOFF-FASER FÜR DEN EINSATZ IN ZEMENTGEBUNDENEN BAUSTOFFEN, INSBESONDERE BETON**

(30) Priorität: 16.02.2023 CH 1452023
(71) Anmelder: Contec Holding AG, 7013 Domat Ems (CH)
(72) Erfinder: JARVIS, Alistair Douglas Mclean, 7013 Domat/Ems (CH)
(74) Vertreter: Luchs, Willi

(57) **Zusammenfassung**

Die Erfindung betrifft eine Kunststoff-Faser für den Einsatz in zementgebundenen Baustoffen, insbesondere Beton, die aus einer polyolefinen Faser hergestellt ist, die um den Faktor grösser als 3 gereckt ist und einen mittleren Durchmesser von 0,15 bis 0,8 mm mit einer Schnittlänge von 6 bis 25 mm entsprechend annähernd 160 bis 4'600 dtex (Decitex = Gramm pro 10'000 Laufmeter) aufweist, wobei die Kunststoff-Faser in Hochfesten Beton mit Korndurchmessern von insbesondere höchstens 12 mm und einer minimalen Druckfestigkeit von zumindest 55 MPa oder in Ultra-Hochfestem-Beton (UHFB) mit Korndurchmesser insbesondere höchstens von 8 mm und einer minimalen Druckfestigkeit von 120 MPa einsetzbar ist. Mit dieser Vermischung von diesen einfach herstellbaren Kunststoff-Fasern in Hochfesten Beton oder in Ultra-Hochleistungs-Beton (UHFB) resultiert eine Erhöhung der Festigkeitswerte der aus diesen gefertigten Erzeugnissen.

## Beschreibung

Die Erfindung betrifft eine Kunststoff-Faser für den Einsatz in zementgebundenen Baustoffen, insbesondere Beton, bestehend aus gereckten Fasern aus Polymeren oder Polymermischungen mit einem mittleren Durchmesser von vorzugsweise grösser als 0,15 mm, entsprechend annähernd 160 dtex.

Es ist bekannt, Kunststoff-Fasern nach der eingangs erwähnten Gattung anstelle von üblicherweise verwendeten Stahlarmierungen in Beton einzusetzen, weil sie mit sehr guten Eigenschaften hinsichtlich einerseits einer relativ hohen Zugfestigkeit und andererseits eine hohe Verbundfestigkeit mit dem Beton bewirken.

In der Druckschrift EP 1 929 099 B1 ist eine solche Kunststoff-Faser für den Einsatz in Beton mit Grösstkorndurchmessern von mehr als 4 mm geoffenbart. Sie besteht aus Bikomponenten-Fasern mit einen mittleren Durchmesser von 0,15 bis 2 mm entsprechend ca. 160 bis 7'150 dtex (Decitex = Gramm pro 10'000 Laufmeter), die einen zentralen Kern und einen diesen umhüllenden Mantel bilden und um den Faktor 5 bis 15 gereckt sind. Die Bikomponentenfasern sind mit einer durchgehend oder unterbrochen strukturierten oder gerillten Oberfläche aufgeprägt, wobei die Tiefe der Strukturierung mehr als 10% des mittleren Faserdurchmessers und die Maximalabstände der Strukturspitzen innerhalb angebrachter Strukturen in axialer Richtung im Bereich zwischen 0,5 mm und 3 mm betragen soll.

Aus der Druckschrift EP 1 350 773 sind mehrschichtige thermoplastische Kunststofffasern für die Verstärkung von Beton bekannt geworden. Die Polymere der verschiedenen Schichten weisen unterschiedliche Schmelzpunkte auf. Das Polymer mit dem tieferen Schmelzpunkt liegt im Kern, jenes mit dem höheren im Mantel, wobei der Unterschied 10°C bis 20°C betragen soll. Diese Massnahme soll für die Reckung nach Erwärmung in einem Spezialofen dienen, indem mit der Erwärmung der äusseren Schicht die innere ebenfalls hinreichend erwärmt wird, sodass eine Reckung um den Faktor 3 bis 12 möglich wird. Durch das Recken werden die Kunststoffmoleküle längsorientiert. Dadurch wird erst die Festigkeit im Kunststoff erzielt. Zur Erhöhung der Haftkraft im Beton werden diese Kunststofffasern vor dem Recken auf ihrer Aussenseite mit Strukturen versehen. Im Einzelnen werden diese Filamente so hergestellt, dass zunächst mittels einer Koextrusion eine zwei- oder mehrlagige Folie hergestellt wird. Hernach wird diese Folie mittels Kalander mit einer Prägung versehen. Anschliessend wird die Folie in schmale Bändchen geschnitten. Am Schluss werden die flächigen Bändchen noch gereckt, wodurch die Noppen bzw. Dünn- und Dickstellen effektiv entstehen.

Mit derartigen Kunststoff-Fasern können die mechanischen Eigenschaften von normalen und hochfesten Betonen verbessert werden, indem sie eine homogene Molekularstruktur sowie dichtere Prägungen auf Ihrer Oberfläche aufweisen. Durch die Aufteilung in einem Kern und einem Mantel werden auch ihre Eigenschaften einerseits hinsichtlich der Verarbeitbarkeit und Verbundfestigkeit zwischen Faser und Beton, des Steifheitsgrads, der Dimensionsstabilität und der Abriebfestigkeit, sowie andererseits hinsichtlich einer hohen Zugfestigkeit und einer kleinen Bruchdehnung optimiert. Diese Eigenschaften der bekannten Kunststoff-Fasern beschränken sich ausdrücklich auf deren Einsatz mit normalem Beton.

Der Erfindung liegt die Aufgabe zugrunde, Kunststoff-Fasern zu schaffen, die einfach und kostengünstig herstellbar und derart beschaffen sind, dass sie in Kombination mit dem zu verwendenden Beton Festigkeitswerte erreichen, die im Vergleich zu normalem Beton mit oder ohne Bewehrung deutlich höher sind.

Diese Aufgabe wird erfindungsgemäss dadurch gelöst, dass die Kunststoff-Faser aus einer polyolefinen Faser hergestellt ist, die um den Faktor grösser als annähernd 3 gereckt ist, wobei sie vorzugsweise mit einem mittleren Durchmesser von 0,15 bis 0,8 mm mit einer Schnittlänge von vorzugsweise 6 bis 25 mm entsprechend annähernd 160 bis 4'600 dtex dimensioniert ist, und wobei sie in Hochfesten Beton mit Korndurchmessern von insbesondere höchstens 12 mm und einer minimalen Druckfestigkeit von zumindest 55 MPa einsetzbar ist.

Sehr vorteilhaft sind die Kunststoff-Fasern in Ultra-Hochfestem-Beton (UHFB) mit Korndurchmessern von maximal 8 mm und einer minimalen Druckfestigkeit von insbesondere 120 MPa einsetzbar.

Die Kunststoff-Fasern weisen Vorteile gegenüber Stahlfasern auf, bei denen Verletzungsgefahren wegen den spitzen, dünnen Enden bestehen, welche sowohl bei der Verarbeitung als auch im Endprodukt vorhanden sind. Im weiteren sind die Kunststoff-Fasern chemisch beständig und nicht mit einem Korrosionsabbau behaftet.

Durch eine hochdosierte Zugabe dieser erfindungsgemässen Kunststoff-Fasern erhalten die Ultra-Hochfesten-Betone (UHFB) ein duktiles Verhalten und damit ein grosses Verformungsvermögen sowie eine hohe Abrieb- und Nachrissfestigkeit. Sie lassen zudem weder Wasser noch Chloride durchdringen, noch erzeugen sie einen Dampfdruck im vermischten ausgetrockneten Zustand.

Es hat sich herausgestellt, dass sich mit dieser Vermischung von diesen einfach herstellbaren Kunststoff-Fasern insbesondere in Ultra-Hochfesten-Betone (UHFB) nachweisbar eine sehr überraschende Erhöhung der Festigkeitswerte der aus diesen gefertigten Erzeugnissen ergeben, bei denen es sich um verschiedenartige Anwendungen zum Beispiel im Bauwesen handelt, wie zum Beispiel im Tief- oder Hochbau, bei denen die Festigkeitswerte mit normalem Beton nicht mit den vorgegebenen Sicherheitsanforderungen erreichbar sind.

Sehr vorteilhaft eignen sich die Kunststoff-Fasern nach der Erfindung für Hochleistungs-Betone (HFB) zum Beispiel für sogenannte Briefkastenanwendungen, bei denen die Wandstärken der Elemente oder Bauteile gering bei ein paar wenigen Zentimetern gehalten werden können. Mit solchen Elementen werden nicht oder nur beschränkt Kräfte übertragen, wie bei Stützen, Pfeilern, Stützwänden oder dergleichen, sondern es werden bei diesen sehr dünne Wandstärken, wie im Bereich zwischen 1 cm bis 5 cm, ohne Bewehrung oder mit signifikanter Bewehrungsreduktion ermöglicht. Bei diesen Elementen muss primär nur ihr Eigengewicht im gegossenen Zustand stabil gehalten werden, wie zum Beispiel bei dünnwandigen Fassaden, Töpfen, Bodenplatten usw. Die Beimischung der Kunststoff-Fasern in den Faserverbund ermöglichen somit diese Dünnwandigkeit von Elementen bzw. Bauteilen ohne oder mit signifikanter Reduktion der Bewehrung, mittels denen Gewichtseinsparungen erzielt werden können.

Dieser sich ohnehin von normalem Beton sowohl in Bezug auf die Biegezugfestigkeit als auch auf die elastische Grenzzugfestigkeit, und ausserdem bezüglich der Dehnbarkeit und Druckfestigkeit deutlich absetzender Hochfester Beton bzw. Ultra-Hochfester-Beton (UHFB) wird mit der Vermischung mit den Kunststoff-Fasern erfindungsgemäss nochmals substantiell erhöht.

Aufgrund der Dichtigkeit, der Widerstandsfähigkeit gegen aggressive Stoffe und der Abrasionsfähigkeit weist dieser Hochfeste Beton bzw. Ultra Hochfeste Beton (UHFB) mit diesen Kunststoff-Fasern zudem eine viel höhere Dauerhaftigkeit als herkömmlicher Beton auf. Durch die hohe Festigkeit bezüglich Zug- und Biegezugbeanspruchungen im Bereich von 7.7 MPa respektive 7.1 MPa kann dieser erfindungsgemässe faserbewehrte Beton auch im Vergleich zu bisherigem mit Stahl bewehrtem Beton höhere Drucklasten insbesondere bei dünnwandigen Elementen sicher verteilen.

Diese Kunststoff-Fasern haben zudem den Vorteil, dass sie sich aus nur einer Sorte monofiler polyolefiner Fasern bestehen, was das Herstellungsverfahren vereinfacht und somit die Herstellungskosten gegenüber Bikomponenten-Fasern reduziert.

Zur Verbesserung des Faserverbunds mit dem Baustoffmaterial bei diesen Verbundwerkstoffen sieht die Erfindung vor, dass die polyolefinen Fasern mit einer durchgehend oder unterbrochen strukturierten Oberfläche versehen sind, wobei die Tiefe der Strukturierung mehr als 3 bis 20% des mittleren Faserdurchmessers beträgt. Dieser mittlere Faserdurchmesser wird dabei aus der Menge der verwendeten Fasern gebildet.

Damit wird eine Verbesserung des Verbundes zwischen den Fasern und der Zementmatrix erreicht. Somit können die Lasten durch die Fasern besser aufgenommen werden. Um den Faserverbund mit dem Baustoffmaterial weiter zu steigern, können die polyolefinen Fasern mit einer gerillt geprägten Oberfläche versehen werden.

Es ist in diesem Sinne vorteilhaft, wenn die Maximalabstände der Strukturspitzen innerhalb angebrachter Strukturen in axialer Richtung im Bereich zwischen 0,3 mm und 2 mm bemessen sind.

Bei einem Ausführungsbeispiel einer Kunststoff-Faser für den Einsatz in die Ultra-Hochfestem-Beton (UHFB) mit Grösstkorndurchmesser <8 mm und einer minimalen Druckfestigkeit von fc,t = 120 MPa (gemäss SIA MB 2052) als zementgebundener Baustoff werden unterschiedliche reine, gereckte Fasern aus Polymeren oder Polymermischungen mit einem mittleren Durchmesser von zum Beispiel 0,40 mm und einer Menge von 3`200 dtex (Decitex = Gramm pro 10'000 Laufmeter) eingesetzt. Bei diesen Kunststoff-Fasern handelt es sich bei dem Beispiel um polyolefine Fasern, die um den Faktor 4 bis 5 gereckt sind und mit einer Schnittlänge von 20 mm entsprechend ca. 3'200 dtex (Decitex = Gramm pro 10'000 Laufmeter) aufweisen.

Bei einer Verwendung der Kunststoff-Faser für den Einsatz in Hochfestem Beton sind Korndurchmesser von höchstens 12 mm verwendbar und die Druckfestigkeit des Betons ist auf zumindest fc,t = 55 Mpa festgelegt.

Die polyolefinen Fasern sind mit einer durchgehend oder unterbrochen strukturierten Oberfläche geformt, wobei die Tiefe der Strukturierung zum Beispiel 10 % des mittleren Faserdurchmessers von 4 mm beträgt, also ca. 0,4 mm. Die Maximalabstände der Strukturspitzen innerhalb angebrachter Strukturen in axialer Richtung im Bereich können beispielsweise mit 1.5 mm bemessen sein. Die gerillten Oberflächen der jeweiligen Fasern sind mit Quernuten durch Walzen geprägt.

Bei den Korndurchmessern handelt es sich um die beigemischten Bestandteile im Beton, wie Sand, Kieselsteine, Gestein oder dergleichen, deren Grösstkorndurchmesser bei den Hochfesten Betons bzw. des Ultra-Hochfesten-Betons (UHFB) entsprechend festgelegt sind.

Eine Vielzahl von diesen vorzugsweise mit einer beliebigen Länge hergestellten Fasern können zu einem Bündel zusammengestellt und zum Beispiel mit einer wasserlöslichen Kunststoff-Folie ummantelt werden. Anschliessend werden sie als Bündel mehrmals auf jeweils eine Endlänge von zum Beispiel 20 mm geschnitten.

Die Erfindung ist mit den oben erläuterten Ausführungsbeispielen ausreichend dargetan. Sie könnte aber noch durch andere Varianten erläutert sein. Die Abmessungen und der prozentuale Menganteil der Fasern können in Abhängigkeit der Verwendung des Hochfesten Betons bzw. des Ultra-Hochfesten-Betons (UHFB) zur Erzielung von optimalen Festigkeitswerten der Mischung bestimmt werden.

Die Fasern werden in Beuteln verpackt und für das Mischen in die Betonmasse geleert.

Die Fasern können als Bi-Komponenten-Fasern mittels eines Co-Extrudierverfahrens aus einem zentralen Kern und einem diesen umhüllenden Mantel aus unterschiedlichen reinen Polymeren oder Polymermischungen hergestellt sein.

Bei der Verwendung von Hochfestem Beton ist eine Gewichtsmenge von den Kunststoff-Fasern von vorzugsweise 3 bis 10 Kilogramm pro Kubikmeter Beton zumischbar. Dies kann je nach Bedarf bzw. Anforderungen an das zu giessende Element variiert werden.

Bei der Verwendung von Ultra-Hochfestem-Beton (UHFB) ist eine Gewichtsmenge von Kunststoff-Fasern von vorzugsweise 10 bis 50 Kilogramm pro Kubikmeter Beton zumischbar sind. Dies kann ebenso je nach Bedarf bzw. Anforderungen an das zu giessende Element optimiert zugemischt werden.

Wie oben erwähnt ist, eignet sich die Betonmischung für die Herstellung von Elementen bzw. Bauteilen ohne Bewehrung oder mit signifikanter Bewehrungsreduktion mit dünnen Wandstärken, wie im Bereich zwischen 1 cm und 5 cm. Die jeweiligen Elemente aus der Betonmischung sind zumindest für ein Stabilhalten ihres Eigengewichtes im gegossenen Zustand verwendbar.

Es kann sich bei den Elementen um dünnwandige Fassaden, Töpfe, Bodenplatten oder dergleichen handeln. Bei Fassaden können die Längen und Breiten mehrere Meter betragen. Es ist aber nicht ausgeschlossen, dass die Betonmischungen nach der Erfindung für Stützmauern etc. verwendet werden können, bei denen eine gewisse Druck- und/oder Zugbelastung besteht.

## Patentansprüche

1. Kunststoff-Faser für den Einsatz in zementgebundenen Baustoffen, insbesondere Beton, bestehend aus einer gereckten Faser aus einem Polymer oder Polymermischung mit einem mittleren Durchmesser von vorzugsweise grösser als 0,15 mm, entsprechend annähernd 160 dtex, **dadurch gekennzeichnet, dass**
die Kunststoff-Faser aus einem polyolefinen Kunststoff hergestellt ist, die um den Faktor grösser als annähernd 3 gereckt ist und vorzugsweise einen mittleren Durchmesser von 0,15 bis 0,8 mm mit einer Schnittlänge von vorzugsweise 6 bis 25 mm entsprechend annähernd 160 bis 4'600 dtex aufweist, wobei sie in Hochfesten Beton mit Korndurchmessern von insbesondere höchstens 12 mm und einer minimalen Druckfestigkeit von zumindest 55 MPa oder in Ultra-Hochfesten-Beton (UHFB) mit Korndurchmessern von insbesondere höchstens 8 mm und einer minimalen Druckfestigkeit von insbesondere 120 MPa einsetzbar ist.

2. Kunststoff-Faser nach Anspruch 1, **dadurch gekennzeichnet, dass** die polyolefinen Fasern mit einer durchgehend oder unterbrochen strukturierten Oberfläche versehen sind, wobei die Tiefe der Strukturierung mehr als 3 bis 20% des mittleren Faserdurchmessers beträgt.

3. Kunststoff-Faser nach Anspruch 1 oder 2, **dadurch gekennzeichnet, dass**
die Maximalabstände der Strukturspitzen innerhalb angebrachter Strukturen in axialer Richtung im Bereich zwischen 0,3 mm und 2 mm bemessen sind.

4. Kunststoff-Faser nach Anspruch 1, **dadurch gekennzeichnet, dass** die polyolefine Faser eine gerillt geprägte oder gewellte Oberfläche aufweist.

5. Kunststoff-Faser nach einem der Ansprüche 1 bis 4, **dadurch gekennzeichnet, dass**
für die Verwendung in Hochfestem Beton mit Korndurchmessern von höchstens 12 mm die Druckfestigkeit des Betons auf zumindest fc,t = 55 Mpa festgelegt ist.

6. Kunststoff-Faser nach einem der Ansprüche 1 bis 4, **dadurch gekennzeichnet, dass**
für die Verwendung in Ultra-Hochfesten-Beton (UHFB) mit Korndurchmessern von höchstens 8 mm die minimale Druckfestigkeit des Betons auf fc,t = 120 Mpa (gemäss SIA MB 2052) festgelegt ist.

7. Kunststoff-Faser nach einem der Ansprüche 1 bis 6, **dadurch gekennzeichnet, dass**
die Faser geeignet ist, durch eine Anzahl in Beuteln verpackt zu werden.

8. Kunststoff-Faser nach einem der Ansprüche 1 bis 7, **dadurch gekennzeichnet, dass**
die Faser als Bi-Komponenten-Faser mittels Ko-Extrusion hergestellt ist.

9. Betonmischung mit Kunststoff-Fasern nach einem der Ansprüche 1 bis 8, **dadurch gekennzeichnet, dass**
bei der Verwendung von Hochfestem Beton eine Gewichtsmenge von Kunststoff-Fasern von vorzugsweise 3 bis 10 Kilogramm pro Kubikmeter Beton zumischbar sind.

10. Betonmischung mit Kunststoff-Fasern nach einem der Ansprüche 1 bis 4 und 6 bis 8, **dadurch gekennzeichnet, dass**
bei der Verwendung von Ultra-Hochfestem-Beton (UHFB) eine Gewichtsmenge von Kunststoff-Fasern von vorzugsweise 10 bis 50 Kilogramm pro Kubikmeter Beton zumischbar sind.

11. Betonmischung mit Kunststoff-Fasern nach einem der Ansprüche 1 bis 8, **dadurch gekennzeichnet, dass**
die Betonmischung für die Herstellung von Elementen mit dünnen Wandstärken ohne Bewehrung oder mit signifikanter Bewehrungsreduktion, wie im Bereich vorzugsweise zwischen 1 cm und 5 cm, verwendbar ist.

12. Betonmischung nach Anspruch 11, **dadurch gekennzeichnet, dass** die jeweiligen Elemente aus der Betonmischung zumindest für ein Stabilhalten ihres Eigengewichtes im gegossenen Zustand verwendbar sind.

13. Betonmischung nach Anspruch 11 oder 12, **dadurch gekennzeichnet, dass**
es sich bei den Elementen um dünnwandige Fassaden, Töpfe, Bodenplatten oder dergleichen ohne oder mit signifikanter Reduktion der Bewehrung handelt.
